# EUROPEAN PATENT APPLICATION

(11) **EP 4 154 960 A1**
(43) Date of publication of application: **29.03.2023**
(21) Application number: 22197375.3
(22) Date of filing: 23.09.2022
(51) Int. Cl.: B01D 24/00, B01D 61/16, B01D 63/02

(54) **HYBRID FILTER ASSEMBLY**

(30) Priority: 23.09.2021 US 202163261543 P
(71) Applicant: Pentair Water Pool and Spa, Inc., Cary, NC 27518 (US)
(72) Inventor: DZINDO, Azur, Cary, 27518 (US); SAFON, Thomas Johnson, Cary, 27518 (US); McEWAN, Sean, Cary, 27518 (US); VAN STRAALEN, Yannic, Cary, 27518 (US); BLUME, Ingo, 7555 Hengelo (NL); DEKKER, Remon, Cary, 27518 (US); SPITS, Joost, Cary, 27518 (US)
(74) Representative: Viering, Jentschura & Partner mbB Patent- und Rechtsanwälte

(57) **Abstract**

A two-stage filter (200) enclosed within a single vessel (210) is provided. The two-stage filter (200) is provided in the form of the vessel (210) having a first filtration stage (310) configured to capture particles of a first size, and a second filtration stage (320) downstream of the first filtration stage (310) and in fluid communication with the first filtration stage (310) and configured to capture particles of a second size, wherein the first size is larger than the second size. The first filtration stage (310) may comprise a porous media (410). The second filtration stage (320) may comprise one or more membrane filters.

## Description

### CROSS-REFERENCE TO RELATED APPLICATIONS

This application claims the benefit of U.S. Provisional Application Serial No. 63/261,543, filed September 23,2021, the contents of which are hereby incorporated by reference in its entirety for all purposes.

### TECHNICAL FIELD

This disclosure generally relates to filters. More particularly, the disclosure relates to a hybrid two-stage filter for an aquatic application.

### BACKGROUND

Filtration systems are an important aspect of maintaining water clarity and quality in aquatic systems. Contaminants that contain bacteria or pathogens may be introduced into bodies of water by environmental sources. Other contaminants or debris may be introduced by swimmers and bathers such as sweat, bodily oil or secretions, suntan lotion, urine, and other substances. In addition to contributing to high turbidity, contaminants can also react with disinfectant chemicals to produce chloramines and other disinfection by-products, which can contribute to adverse health effects. Thus, in pool and spa systems, to clean the water, the water is typically passed through a filtration system. Filtration systems are used to remove the pollutants and contaminants to reduce turbidity and to promote visual clarity of the water. Filtration systems help ensure healthy conditions in swimming pools, hot tubs, spas, plunge pools, and other recreational water venues or aquatic applications.

Traditional pool and spa filtration technologies used in the art include diatomaceous earth filters, pressure-fed sand filters, gravity sand filters, and cartridge filters. However, these filtration technologies have inherent shortcomings, including the inability to capture small, suspended solids, bacteria and viruses without the use of filter aids. Conversely, high efficiency filter media capable of capturing submicron particles and microorganisms may not be able to process larger suspended solids without becoming clogged. Thus, high efficiency filter media such as hollow fiber membrane technology is traditionally employed through the use of one or more externally-located pre-filter(s).

Therefore, there is a need in the art for a filtration system that can effectively filter out both large and small contaminates without clogging the filtration system.

### SUMMARY

A two-stage filter is provided. In one embodiment, the two-stage filter assembly comprises a vessel comprising a first filtration stage configured to capture particles of a first size, and a second filtration stage downstream of the first filtration stage and in fluid communication with the first filtration stage configured to capture particles of a second size. The first size is larger than the second size.

In another embodiment, a two-stage filter assembly comprises a vessel comprising a first filtration stage comprising a porous media and a second filtration stage in fluid communication with the first filtration stage comprising one or more membrane filters. The porous media is positioned in at least a lower portion of the vessel and surrounds at least a portion of the one or more membrane filters.

In another embodiment, a pool system comprises a pool and a pool pad in fluid communication with the pool. The pool pad includes an inlet pipe connected to and downstream of a drain positioned in the pool, a filter vessel comprising a two-stage filter downstream of the inlet pipe, a valve downstream of the filter vessel, and an outlet pipe connected to the pool and positioned downstream of the valve.

In one embodiment, the first filtration stage comprises a porous media selected from the group consisting of sand, crushed glass, activated media such as carbon, pea gravel, and combinations thereof.

In one embodiment, the second filtration stage comprises one or more hollow fiber membrane filters.

In one embodiment, the one or more membrane filters comprises a housing including a permeate pipe having a plurality of openings, one or more hollow fiber membranes surrounding the permeate pipe, and an outlet connected to and downstream of the permeate pipe. A first endcap is positioned at a first end of the housing and a second endcap is positioned at a second end of the housing opposite the first.

In one embodiment, the first endcap is a blind endcap, and the second endcap is a lateral end cap comprising a plurality of slits.

In one embodiment, the plurality of slits have a first width smaller than a second width of the particles captured in the first filtration stage.

In one embodiment, the second stage filtration is a membrane filter selected from the group consisting of a membrane filter comprising one or more straight membranes surrounding a permeate pipe, a membrane filter comprising one or more curved membranes surrounding a permeate pipe, a membrane filter comprising one or more membranes helically wound around a permeate pipe, and combinations thereof.

In one embodiment, the vessel is pressurized.

In one embodiment, the vessel comprises a first portion and a second portion, and the first portion and the second portion are joined to form an enclosed container.

In one embodiment, the first portion and the second portion of the vessel are joined by at least one of a circumferential retaining device, an elastomeric seal, and bolted fasteners.

In one embodiment, the vessel comprises an inlet port, an inlet pipe downstream of the inlet port, and a diffuser downstream of the inlet pipe. The diffuser is configured to distribute a flow of unfiltered water to the first filtration stage.

In one embodiment, the vessel comprises a manifold comprising one or more module receivers configured to hold a membrane filter of the one or more membrane filters. Each of the one or more module receivers comprises a central opening configured to permit a flow of water into and out of the membrane filter, an outlet pipe coupled to each of the one or more central openings, and an outlet port downstream of the outlet pipe.

In one embodiment, the vessel comprises a relief valve positioned at a top portion of the vessel.

In one embodiment, the vessel comprises a drain port positioned at a bottom portion of the vessel.

In one embodiment, the two-stage filter comprises a housing including a first filtration stage provided in the form of a porous media, and a second filtration stage provided in the form of one or more membrane filters.

In one embodiment, the pool system comprises a controller configured to control one or more components of the pool pad.

In one embodiment, the controller is configured to operate the pool pad in a filtration mode. The filtration mode comprises cleaning a first stream of pool water by permitting water from the pool to flow through a fluid flow path form from the drain into the inlet pipe, through the filter vessel, through the valve, through the outlet pipe, and out to the pool.

In one embodiment, the controller is configured to operate the pool pad in a backwash mode. The backwash mode comprises cleaning the two-stage filter in a single pass by permitting a second stream of water to flow from the outlet pipe, through the valve, through the filter vessel, through the inlet pipe, and out to a waste collection area.

### DESCRIPTION OF THE DRAWINGS

FIG. 1 is a schematic diagram depicting a swimming pool and one or more components associated with a pool pad;
FIG. 2 is a front isometric view of a hybrid filter assembly according to an embodiment;
FIG. 3A is a side elevational view of the hybrid filter assembly of FIG. 2 with some portions rendered transparent for clarity;
FIG. 3B is a top elevational view of the hybrid filter assembly of FIG. 2 with some portions rendered transparent for clarity;
FIG. 3C is a top isometric view of a bottom portion of the hybrid filter assembly of FIG. 2;
FIG. 4 is a top isometric view showing a first filtration stage of the hybrid filter assembly of FIG. 2;
FIG. 5A is a side elevational view of a membrane filtration module of the hybrid filter assembly of FIGS. 2-4;
FIG. 5B is a side elevational view of a membrane filtration module of FIG. 5A with some portions rendered transparent;
FIG. 6A is a top isometric view of the hybrid filter assembly of FIG. 2 with some portions removed for clarity;
FIG. 6B is a front isometric view of the hybrid filter assembly of FIG. 2 with some portions removed for clarity;
FIG. 7 is a side elevational view of the hybrid filter assembly of FIG. 2 showing a fluid flow path through the assembly according to an embodiment with some portions removed for clarity;
FIG. 8 is a side elevational view of the membrane filtration module of FIG. 5 showing a fluid flow path through the module according to an embodiment with some portions removed for clarity;
FIG. 9 is a side elevational view of the membrane filtration module of FIG. 5 showing a fluid flow path through the module according to an embodiment with some portions removed for clarity;
FIG. 10 is a side elevational view of the hybrid filter assembly of FIG. 2 showing a fluid flow path through the assembly according to an embodiment with some portions removed for clarity;
FIG. 11 is a sectional view of a membrane filtration module according to an embodiment;
FIG. 12 is a sectional view of a membrane filtration module according to another embodiment;
FIG. 13 is a sectional view of a membrane filtration module according to another embodiment; and
FIG. 14 is a sectional view of a membrane filtration module according to another embodiment;

### DETAILED DESCRIPTION

Before any embodiments are described in detail, it is to be understood that the disclosure is not limited in its application to the details of construction and the arrangement of components set forth in the following description or illustrated in the following drawings, which is limited only by the claims that follow the present disclosure. The disclosure is capable of other embodiments, and of being practiced, or of being carried out, in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following description is presented to enable a person skilled in the art to make and use embodiments of the disclosure. Various modifications to the illustrated embodiments will be readily apparent to those skilled in the art, and the generic principles herein can be applied to other embodiments and applications without departing from embodiments of the disclosure. Thus, embodiments of the disclosure are not intended to be limited to embodiments shown but are to be accorded the widest scope consistent with the principles and features disclosed herein. The following detailed description is to be read with reference to the figures, in which like elements in different figures have like reference numerals. Skilled artisans will recognize the examples provided herein have many useful alternatives and fall within the scope of embodiments of the disclosure.

Additionally, while the following discussion may describe features associated with specific devices, it is understood that additional devices and or features can be used with the described systems and methods, and that the discussed devices and features are used to provide examples of possible embodiments, without being limited.

The present disclosure provides a two-stage hybrid filtration device. The hybrid filtration device is defined as a high efficiency, single-pass device. The two-stage filtration is contained within a vessel and is able to capture both larger suspended solids and submicron particles within a single pass. A first stage filtration employs depth filtration to capture large particulates and acts as a pre-filter for a second stage filtration. The second stage filtration employs membrane filtration to capture submicron particulates, bacteria, and viruses. Thus, by being able to capture both large and small suspended solids in a water system, the two-stage filtration device can filter out contaminants such as skin cells, pollen, algae spores, and microorganisms such as bacteria and viruses which may not be effectively filtered out in traditional water filter systems. Therefore, the two-stage filtration according to embodiments of this disclosure provide improved water clarity, decreased disinfection byproduct formation, decreased demand for primary recreational water sanitizer and balancer along with more consistent sanitizer and balancer levels, among other benefits. Further, the hybrid filtration device allows both stages of the filtration to be backwashed simultaneously.

The hybrid filtration device is designed to operate as a filtration device within a body of water or aquatic application, particularly a pool or spa system, to supplement and/or entirely replace a main filter, such as traditional sand, cartridge, or diatomaceous earth filters. Traditional pool and spa filters are generally capable of capturing particles between about 3 to about 30 microns in size. The hybrid filtration device is able to capture particles larger than about 150 microns in size, particularly in the range of 200 to 300 microns in size in the first stage filtration and is capable of capturing particles larger than about 0.005 microns in size, particularly in the range of about 0.02 to about 0.20 microns in the second stage filtration. In some forms, the first stage filtration captures particles that are about 10 microns or larger in size.

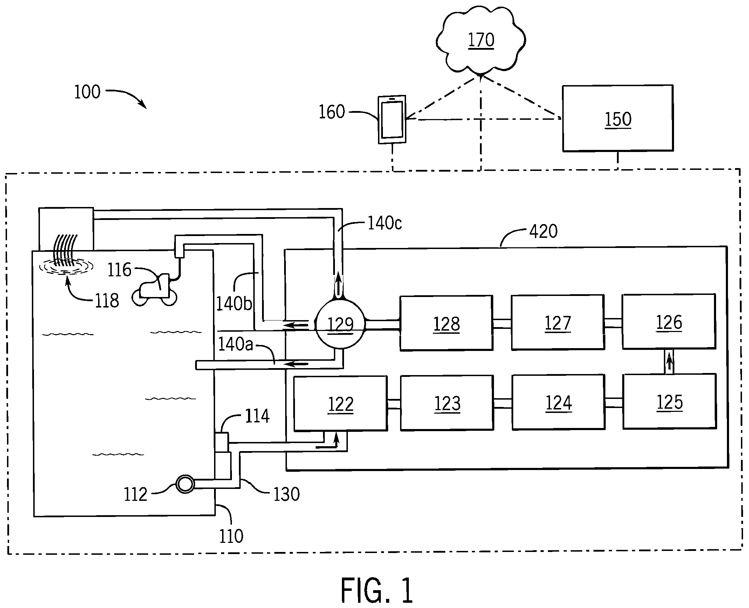

FIG. 1 illustrates an exemplary aquatic application, such as a pool or spa system 100, according to embodiments of the disclosure. As seen in FIG. 1, the pool or spa system 100 comprises a swimming pool 110 and a pool pad 120. Water may flow from the pool 110, through the pool pad 120 via an inlet pipe 130, flow through one or more components associated with the pool pad 120, and circulate back to the pool 110 from the pool pad 120 via one or more outlet pipes 140a-140c. Thus, a fluid circuit is created.

The inlet pipe 130 may permit water from the pool 110 to flow into the pool pad 120 from a drain 112 positioned in the pool 110. In some embodiments, the inlet pipe 130 may also permit water to flow from the pool 110 into the pool pad 120 via a skimmer 114. The pool pad 120 can include one or more components in fluid communication with the pool 110. As shown, the pool pad 120 comprises a variable speed pump 122, a booster pump 123, a filter 124, a heater 125, a sanitizer 126, a water quality monitor 127, a water chemistry regulator 128, and one or more valves 129. The one or more valves 129 may be connected to one or more outlet pipes returning the pool water to the pool 110. As shown, the system 100 comprises three outlet pipes 140a-140c. A first outlet pipe 140a functions as a return pipe. A second outlet pipe 140b is connected to a pool cleaner 116. A third outlet pipe 140c is connected to a water feature 118. It is to be understood that the pool 110 and the pool pad 120 may comprise more or fewer components in a variety of arrangements depending on the embodiment.

Still referring to FIG. 1, the system 100 may further include a central controller 150 and a user device 160 that can interface with the central controller 150 either directly over a local area network or via a cloud network 170. Although FIG. 1 depicts the central controller 150 in communication with the user device 160 and the cloud network 170, it should be noted that various communication methodologies and connections may be implemented to work in conjunction with, or independent from, one or more local controllers associated with one or more individual components associated with the pool or spa system 100 (e.g., a pump controller, a heater controller, etc.)

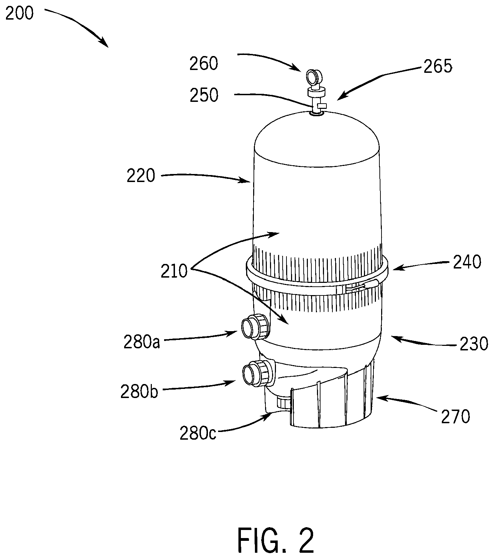

FIG. 2 depicts a hybrid filter assembly 200 according to one embodiment of the disclosure. The hybrid filter assembly 200 may be provided as the filter 124 depicted in FIG. 1. The hybrid filter assembly 200 comprises a filtration vessel 210 defined by a two-stage filtration assembly which is discussed in detail below. As shown, the vessel 210 is substantially cylindrically shaped. However, it is to be understood that the vessel 210 may be any other shape. The vessel 210 may be made from polymeric materials, such as thermoplastics, which have inherent resistance to common environmental and chemical stressors.

As shown, the vessel 210 comprises an upper housing 220 and a lower housing 230. The upper housing 220 and the lower housing 230 are coupled to form a substantially enclosed interior filtration chamber. Various known methods may be used to couple the upper housing 220 and the lower housing 230. For example, as shown, a circumferential retaining device 240 produced predominantly of a suitably corrosion-resistant material, such as stainless steel can engage one or more interconnecting flanges to provide a fluid tight seal as well as structural support between the upper housing 220 and the lower housing 230. In another embodiment, an elastomeric seal (not shown) may be provided between interconnecting flanges, which extend from one or both of the upper housing 220 and the lower housing 230. In yet another embodiment, a series of bolted fasteners (not shown) can be used to couple the upper housing 220 to the lower housing 230. In other embodiments, the filtration vessel 210 may be provided as an inseparable assembly or as a unitary structure.

The upper housing 220 may comprise one or more ports for connecting additional components to the hybrid filter assembly 200. As shown, the upper housing comprises a first port 250 extending through a top surface of the upper housing 220. A pressure gauge 260 is coupled to the first port 250. An external air relief valve 265 is positioned between the pressure gauge 260 and the first port 250. The external air relief valve 265 may be configured to automatically release pressure from within the vessel 210 or may be manually operated.

The lower housing 230 comprises a base 270. The base 270 may provide stability and support to the hybrid filter assembly 200. The lower housing 230 may comprise one or more ports. As shown, the lower housing 230 comprises three ports 280a-280c. An inlet port 280a permits water to flow into the hybrid filter assembly 200, and an outlet port 280b and a drain port 280c permit water to leave the hybrid filter assembly. The inlet port 280a and the outlet port 280b may be connected to the fluid path of the pool pad of FIG. 1. The drain port 280c may be connected to a waste system or may permit the vessel 210 to drain to the environment so that maintenance may be performed on the hybrid filter assembly 200. In some forms, the drain port 280c can be provided as a threaded plug which has an elastomeric seal to provide a fluid tight connection. The inlet port 280a and outlet port 280b may be provided in vertical alignment with respect to each other in the side of the lower housing 230.

Additional ports (not shown) may be included in one or more of the upper housing 220 and/or the lower housing 230. The additional ports may be employed to provide additional benefits, such as improved de-aeration of second stage filtration and/or provide supplemental operational status indicators through externally-connected devices, such as gauges or transducers. In other embodiments, the supplemental devices could be provided as internally connected devices, or cloud connected devices.

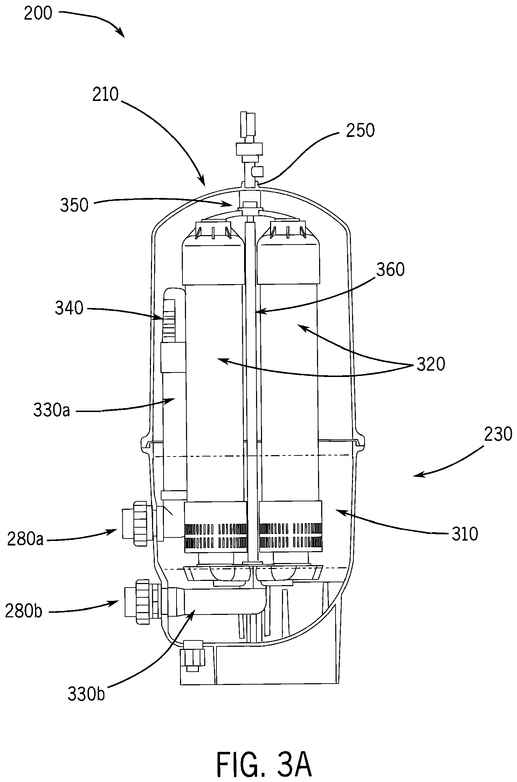

Turning to FIGS. 3A-3C, various internal components of the hybrid filter assembly 200 of FIG. 2 are shown. The hybrid filter assembly 200 comprises a two-stage filtration system comprising a first filtration stage 310 and a second filtration stage 320. Each of the first filtration stage 310 and the second filtration stage 320 may be defined by pressure-driven filtration principles.

As shown in FIG. 3A, the inlet port 280a of FIG. 2 is connected to an internal inlet pipe 330a. The outlet port 280b of FIG. 2 is connected to an internal outlet pipe 330b. During operation, a fluid enters the hybrid filter assembly 200 through the inlet port 280a and the internal inlet piping 330a, flows through the first filtration stage 310 and then the second filtration stage 320, and exits the hybrid filter assembly 200 through the outlet pipe 330b and the outlet port 280b, as explained in more detail below.

In one embodiment, the hybrid filter assembly 200 may also include a diffuser 340, a passive internal air relief valve 350, and an air bleeder tube 360. In one embodiment, the diffuser 340 may be connected to the inlet piping 330 to distribute water throughout the vessel 210. The relief valve 350 may be connected to the first port 250 of FIG. 2. The relief valve 350 can be opened to allow air and/or water in a top portion of the vessel 210 to escape. In some forms, the relief valve 350 can be closed, enabling pressure to build up in the vessel 210. When pressurized, fluid in the vessel 210 may be forced to flow down to the bottom of the vessel 210, and out of the outlet pipe 330b and outlet port 280 and/or out the drain port 280c of FIG. 2.

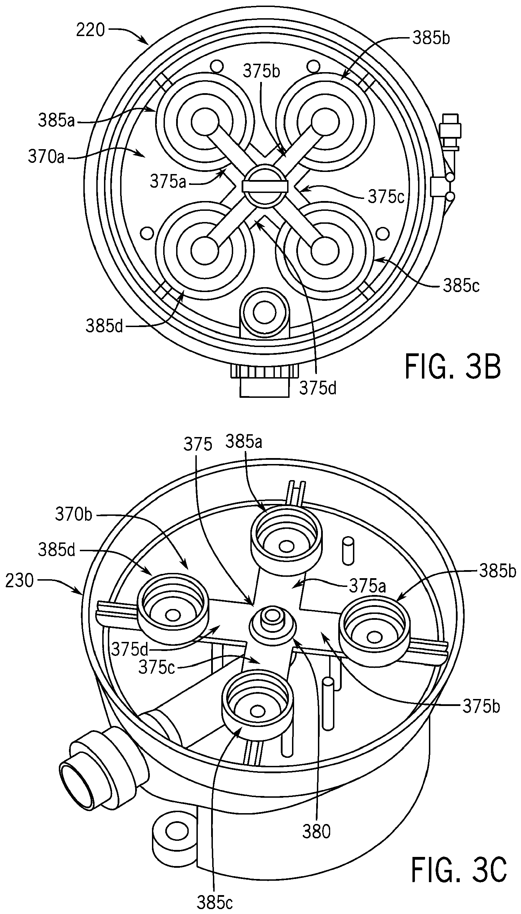

FIG. 3B illustrates a top-down view of the internal components of the upper housing 220 comprising a first portion 370a of a manifold. FIG. 3C illustrates a top isometric view of the lower housing 230 comprising a second portion 370b of the manifold. Together, the first portion 370a of the manifold and the second portion 370b of the manifold may secure one or more second filtration stage modules within the hybrid filter assembly 200. The first portion 370a and the second portion 370b may be collectively referred to as the manifold 370.

As shown, each of the first portion and the second portion 370a, 370b of the manifold 370 comprises one or more arms extending from a center 380. Each of the ends of the one or more arms can include a module receiver. As shown, the manifold 370 comprises four arms 375a-375d and four module receivers 385a-385d. The ends of the arms 300 can include module plugs (not shown). The module plugs can be received by a top end of a second stage filtration module and can form a watertight seal to prevent water from entering or leaving the second filtration stage.

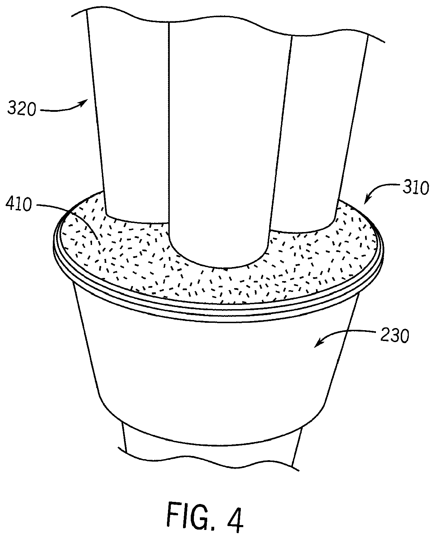

Now referring to FIGS. 4, 5A-5B, and 6A-6B, the first and second filtration stages are shown in more detail. FIG. 4 illustrates a partial enlarged view of the first filtration stage 310 of FIG. 3A. As shown, the first filtration stage 310 may be positioned in the lower housing 230 of the vessel 210 and act as a "pre-filter" for the second filtration stage 320. In some forms, the first filtration stage 310 is provided in the form of a porous media. The first filtration stage 310 operates using depth filtration by capturing debris within the volume of the porous media. Specifically, as fluid flows through the porous media, the depth and pore size of the media creates a physical barrier in which particulates get trapped in the media itself. In one embodiment, the first filtration stage 310 comprises conventional granular media 410 such as sand, crushed glass, activated media such as carbon, pea gravel, or other media. In one embodiment, the first filtration stage 310 is capable of capturing particles larger than about 150 microns. By capturing large particles in the first filtration stage 310, the second filtration stage 320 can work more effectively.

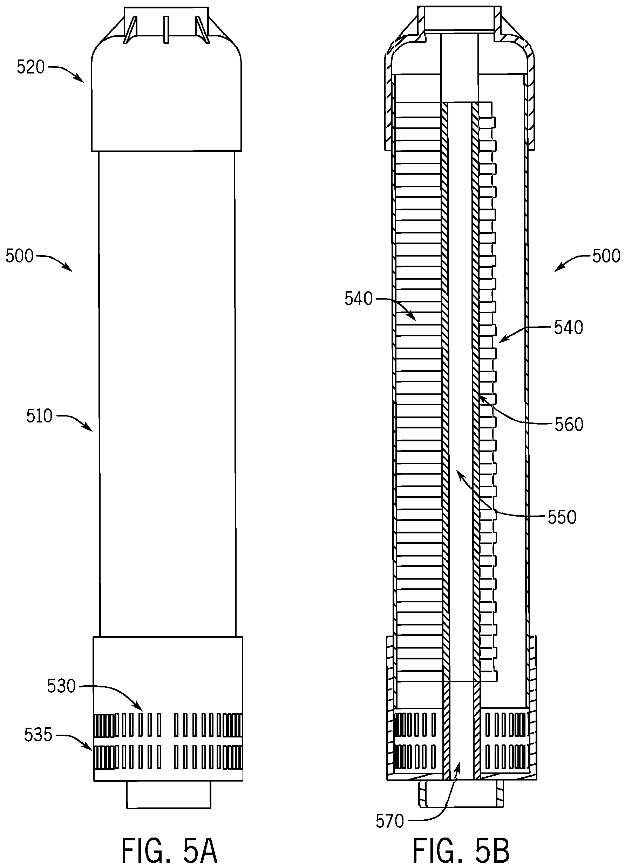

Turning to FIGS. 5A and 5B, a membrane filtration module 500 is shown. The second filtration stage 320 of FIG. 3A is provided in the form of the membrane filtration module 500. The second filtration stage 320 may be a membrane filter utilizing one or more hollow-fiber membrane filter elements. Membrane filtration captures contaminates in a physical barrier via a size-exclusion mechanism consistent with sand, diatomaceous earth, and pleated cartridge pool and spa filter media. However, membrane filtration is capable of capturing particles above about 0.005 microns in size, particularly in the range of about 0.02 to about 0.20 microns.

As shown in FIG. 5A, the membrane filtration module 500 is defined by an enclosed assembly comprising an elongate cylindrical housing 510, a top endcap 520, and a bottom endcap 530. The top endcap 520 may be provided in the form of a "blind" endcap that separates the fluid flow into a module feed and a permeate flow. The top endcap 520 may further isolate the membrane filtration module 500 from unfiltered water introduced to the first filtration stage 310.

The bottom endcap 530 may be provided in the form of a lateral endcap. The bottom endcap 530 may comprise a plurality of axial slits 535 around the circumference of the bottom endcap 530. The bottom endcap is designed to keep the media of the first filtration stage 310 separated from the media of the second filtration stage 320. In some forms, the axial slits 535 have a width of 0.005" (inches) to about 0.02" (inches). The axial slits 535 are designed to be smaller than the size of the media of the first filtration stage 310, so as to prevent the media from the first filtration stage 310 from entering the module 500. Additionally, the bottom endcap 530 is configured to keep the permeate and feed flow paths separate and to fluidly couple a permeate pipe 550 to the vessel 210 of FIG. 2.

Referring specifically to FIG. 5B, various internal components of the membrane filtration module 500 are shown. In one embodiment, the membrane filtration module 500 comprises an asymmetric hollow fiber membrane, produced from selective homopolymers or copolymers. In other embodiments, the membrane filtration module 500 can be provided in a symmetric type with uniform pore structure, or as a layer deposited onto a structural core. In some embodiments, the membrane filtration module 500 can be produced from silicon carbide ceramic having a controlled crystalline or lattice structure. In some forms, the membrane filtration module 500 is provided in the form of one or more ultrafiltration membranes, having a nominal pore size of about 10 to about 50 nanometers, or more particularly, about 20 to about 40 nanometers, and a lumen diameter of about 0.25 millimeters to about 2.5 millimeters. Ultrafiltration membranes may be operated in a dead-end, inside-out deposition mode, and fouling recovery is achieved through backwashing via flux reversal. In other embodiments, the membrane filtration module 500 may be provided in the form of one or more microfiltration membranes having a nominal pore size of about 50 to about 1,500 nanometers. In yet other embodiments, the membrane filtration module 500 may have fibers with a lumen diameter of about 0.3 millimeters to about 3.0 millimeters. Depending on the embodiment, it may be preferable to have fibers with a lumen diameter between 0.5 millimeters and about 2 millimeters. In some embodiments, the membrane filtration module 500 can be operated using an outside-in deposition mode, or the fibers of the membrane filtration module 500 can be provided in a randomized arrangement or helically wound.

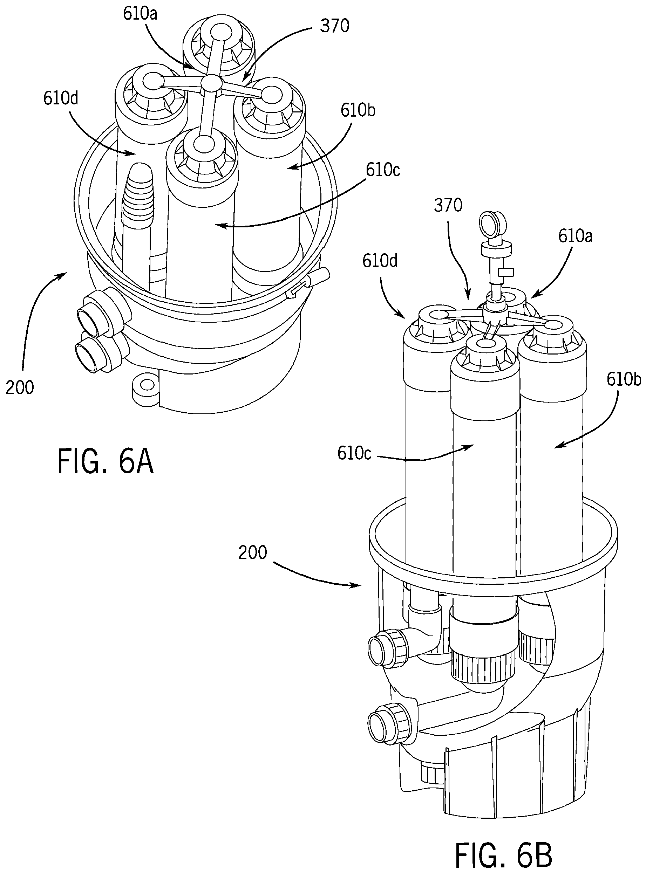

FIGS. 6A-6B illustrate several membrane filtration modules, such as the membrane filtration module 500 of FIGS. 5A and 5B positioned in the hybrid filter assembly 200 of FIG. 2. For clarity, parts of the hybrid filter assembly 200 have been removed to show some of the internal components. Referring back to FIGS. 3B and 3C, four membrane filtration modules 610a-610d are positioned within the manifold 370. It is to be understood that although four membrane filtration modules 610a-610d are shown, the hybrid filter assembly 200 may contain more or fewer membrane filtration modules depending on the embodiment. For example, some embodiments contain multiple membrane filtration modules of the same type and capacity, including nominal pore size, diameter, and practical length, which are co-located within the filtration vessel 102 in a parallel array. Whereas, other embodiments of the invention may contain a single membrane filtration module or multiple membrane filtration modules of different types, lengths and or diameters, employed in series and/or in parallel.

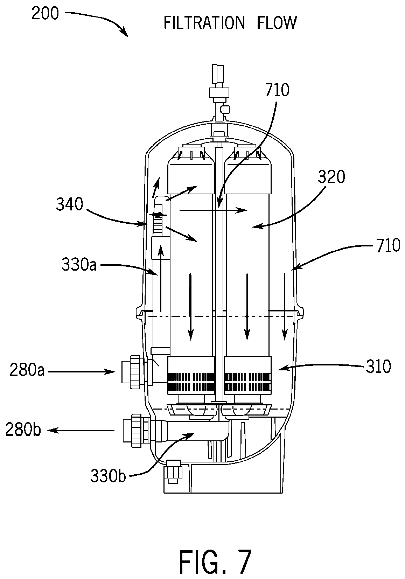

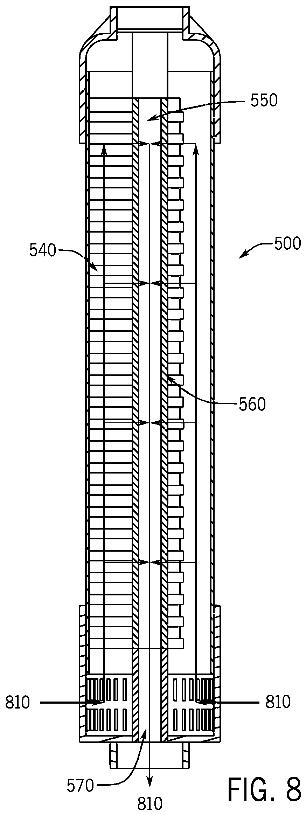

Turning to FIGS. 7-10, a fluid flow path of water through the hybrid filter assembly 200 is described. FIGS. 7 and 8 illustrate a fluid flow path through the hybrid filter assembly 200 in a normal operational or filtration mode. Referring first to FIG. 7, a first fluid flow path 710 of a fluid passing through the first filtration stage 310 is shown. During the filtration mode, fluid enters the hybrid filter assembly 200 through the inlet port 280a and the inlet pipe 330a. The directed fluid is then distributed throughout the top of the hybrid filter assembly 200 via the diffuser 340. The fluid flows downward and through the first filtration stage 310, which captures large particles.

Next, referring to FIG. 8, the fluid flows into the second filtration stage through the axial slits 535 of the membrane filtration module 500 as shown by a second fluid flow path 810. The fluid flows upwards through the membranes 540 and into the permeate pipe 550 through the axial openings 560. The membranes 540 capture submicron particles, bacteria, and viruses in the fluid. The clean permeate fluid is then directed downward through the permeate pipe 550, and out of the module 500 via the outlet 570. The clean water then exits the hybrid filter assembly 200 through the outlet pipe 330b and the outlet port 280b. Over time, the first and second filtrations stages 310, 320 may lose efficiency due to fouling of the filters. Thus, the first and second filtrations stages 310, 320 may be backwashed or otherwise cleaned to remove the contaminates, restoring the efficiency of the hybrid filter assembly 200.

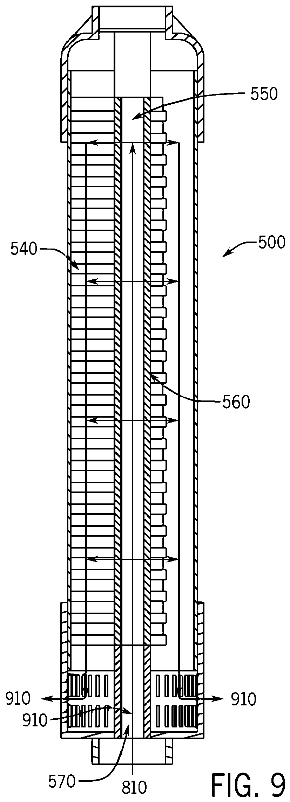

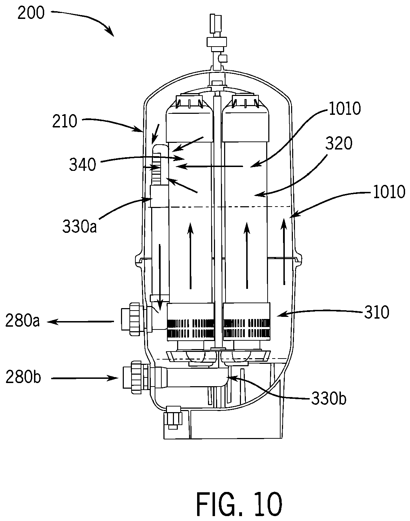

FIGS. 9 and 10 illustrate a fluid flow path through the hybrid filter assembly 200 in a backwash mode. For backwashing, the fluid flow is reversed with respect to the filtration mode as described above. Thus, the particles that have previously been captured by the first and the second filtration stages 310, 320 may be removed from the hybrid filter assembly 200 in unison. Referring first to FIG. 9, water is provided to the hybrid filter assembly 200 through the outlet port 380b and outlet pipe 330b and passes through the membrane filtration module 500 through the outlet 570. As shown by a third fluid flow path 910, the water flows through the permeate pipe 550, out of the axial openings 560, through the membranes 540, and out the outlet 570.

Next, referring to FIG. 10, the water from the outlet 570 of the second filtration stage 320 is directed back through the first filtration stage 310. As shown by a fourth fluid flow path 1010, the water flows up through the media of the first filtration stage 310, into the diffuser 340, down through the inlet pipe 330a, and out of the vessel 210 via the inlet port 280a. When the first filtration stage 310 is backwashed with sufficient velocity, the media lifts and disperses, allowing the trapped particulates to flow out of the media volume. Thus, particles that were captured by the first and the second stages of filtration are removed during a single pass. By back washing the hybrid filter assembly 200, the efficiency of the first and second filtration stages 310, 320 may be maintained, thereby, extending the life of the hybrid filter assembly 200. In other forms, the hybrid filter assembly 200 may be cleaned (e.g., physically and/or chemically) or otherwise operated to remove debris and contaminants after use.

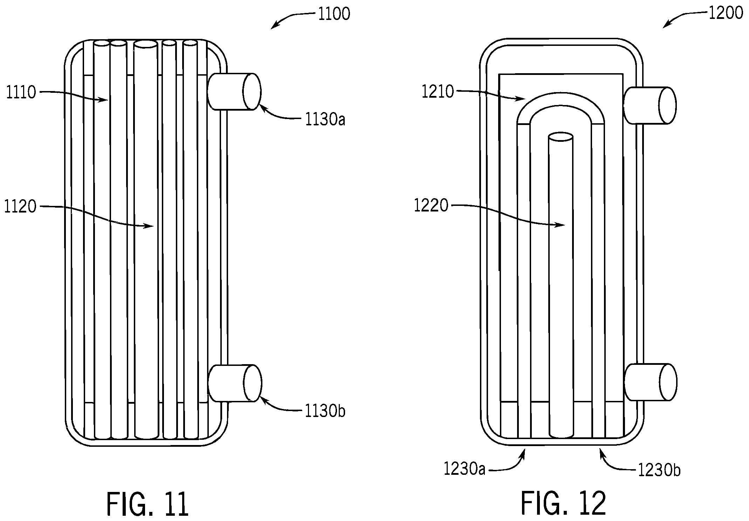

FIGS. 11-14 illustrate alternative embodiments of a membrane filtration module. In one embodiment, as shown in FIG. 11, a membrane filtration module 1100 may have one or more membranes 1110 positioned around a permeate pipe 1120. During filtration, feed water enters the module 1100 through an inlet pipe 1130a and exits the module 1100 through an exit pipe 1130b. Similar to the module 500 of FIGS. 5A-5B, the permeate pipe 1120 may have axial openings (not shown) along the length of the permeate pipe 1120 to allow the permeate water from the membranes 1110 to flow in and out of the permeate pipe 1120. In an alternative embodiment, the permeate pipe 1120 may have radial slits along the length of the pipe 1120.

In another embodiment, as shown in FIG. 12, a membrane filtration module 1200 may have one or more curved or U-shaped membranes 1210 positioned around a permeate pipe 1220. During operation, feed water may enter the membrane 1210 through a first end 1230a and exit the membrane 1210 at a second end 1230b.

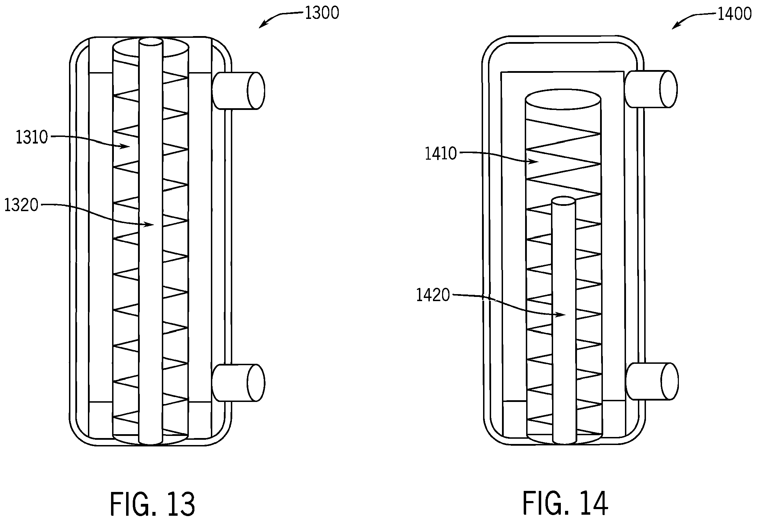

In another embodiment, as shown in FIG. 13, a membrane filtration module 1300 may include helical wound membranes 1310, rather than straight or curved membranes. FIG. 14 illustrates yet another embodiment of a membrane filtration module. FIG. 14 is similar to FIG. 13; however, here, a permeate pipe 1420 is shorter. Thus, helically wound membranes 1410 extend past the permeate pipe 1420.

Further aspects of the disclosure are demonstrated by way of example.

In Example 1, a filtration assembly for an aquatic application, comprising: a vessel comprising: a first filtration stage configured to capture particles of a first size; and a second filtration stage downstream of the first filtration stage and in fluid communication with the first filtration stage configured to capture particles of a second size, the first size being larger than the second size and the first filtration stage and second filtration stage both being entirely enclosed in the vessel.

In Example 2, the filtration assembly of Example 1, wherein the first filtration stage comprises a porous media selected from the group consisting of sand, crushed glass, activated media such as carbon, pea gravel, and combinations thereof.

In Example 3, the filtration assembly of Example 1 or 2, wherein the second filtration stage comprises one or more membrane filters.

In Example 4, the filtration assembly of Example 3, wherein each of the one or more membrane filters comprises: a housing comprising: a permeate pipe comprising a plurality of openings; one or more hollow fiber membranes surrounding the permeate pipe; and an outlet connected to and downstream of the permeate pipe; a first endcap positioned at a first end of the housing; and a second endcap positioned at a second end of the housing opposite the first end.

In Example 5, the filtration assembly of Example 4, wherein: the first endcap is a blind endcap; and the second endcap is a lateral end cap comprising a plurality of slits.

In Example 6, the filtration assembly of Example 5, wherein the plurality of slits have a first width smaller than a second width of the particles captured in the first filtration stage.

In Example 7, the filtration assembly of any one of Examples 1 to 6, wherein the second stage filtration is a membrane filter selected from the group consisting of a membrane filter comprising one or more straight membranes surrounding a permeate pipe, a membrane filter comprising one or more curved membranes surrounding a permeate pipe, a membrane filter comprising one or more membranes helically wound around a permeate pipe, and combinations thereof.

In Example 8, a filtration assembly for a swimming pool, comprising: a vessel comprising; a first filtration stage comprising a porous media; and a second filtration stage in fluid communication with the first filtration stage comprising one or more membrane filters, the porous media being positioned in at least a lower portion of the vessel and surrounding at least a portion of the one or more membrane filters.

In Example 9, the filtration assembly of Example 8, wherein the vessel is pressurized.

In Example 10, the filtration assembly of Example 8, wherein: the vessel comprises a first portion and a second portion; and the first portion and the second portion are joined to form an enclosed container.

In Example 11, the filtration assembly of Example 10, wherein the first portion and the second portion are joined by at least one of a circumferential retaining device, an elastomeric seal, or bolted fasteners.

In Example 12, the filtration assembly of any one of Examples 8 to 11, wherein the vessel comprises: an inlet port; an inlet pipe downstream of the inlet port; a diffuser downstream of the inlet pipe, the diffuser configured to distribute a flow of unfiltered water to the first filtration stage.

In Example 13, the filtration assembly of any one of Examples 8 to 12, wherein the vessel comprises: a manifold comprising: one or more module receivers configured to hold a membrane filter of the one or more membrane filters, each of the one or more module receivers including: a central opening configured to permit a flow of water into and out of the membrane filter; an outlet pipe coupled to each of the one or more central openings; and an outlet port downstream of the outlet pipe.

In Example 14, the filtration assembly of any one of Examples 8 to 13, wherein the vessel comprises a relief valve positioned at a top portion of the vessel.

In Example 15, the filtration assembly of any one of Examples 8 to 14, wherein the vessel comprises a drain port positioned at a bottom portion of the vessel.

In Example 16, a pool filtration system, comprising: a swimming pool; a pool pad in fluid communication with the swimming pool comprising: an inlet pipe connected to and downstream of a drain positioned in the pool; a filter vessel comprising a two-stage filter downstream of the inlet pipe; a valve downstream of the filter vessel; and an outlet pipe connected to the pool and positioned downstream of the valve.

In Example 17, the pool system of Example 16, wherein the two-stage filter comprises a housing including: a first filtration stage provided in the form of a porous media; and a second filtration stage provided in the form of one or more membrane filters.

In Example 18, the pool system of Example 16 or 17, further including a controller configured to control one or more components of the pool pad.

In Example 19, the pool system of Example 18, wherein the controller is configured to operate the pool pad in a filtration mode, the filtration mode including cleaning a first stream of pool water by permitting water from the pool to flow from the drain into the inlet pipe, through the filter vessel, through the valve, through the outlet pipe, and out to the pool.

In Example 20, the pool system of Example 18, wherein the controller is configured to operate the pool pad in a backwash mode, the backwash mode includes cleaning the two-stage filter in a single pass by permitting a second stream of water to flow from the outlet pipe, through the valve, through the filter vessel, through the inlet pipe, and out to a waste collection area.

It will be appreciated by those skilled in the art that while the above disclosure has been described above in connection with particular embodiments and examples, the above disclosure is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein. Various features and advantages of the above disclosure are set forth in the following claims.

## Claims

1. A filtration assembly (200) for an aquatic application, comprising:
a vessel (210) comprising:
a first filtration stage (310) configured to capture particles of a first size; and
a second filtration stage (320) downstream of the first filtration stage (310) and in fluid communication with the first filtration stage (320) and configured to capture particles of a second size, the first size being larger than the second size and the first filtration stage (310) and second filtration stage (320) both being entirely enclosed in the vessel (210).

2. The filtration assembly (200) of claim 1, wherein the first filtration stage (310) comprises a porous media (410) selected from the group consisting of sand, crushed glass, activated media such as carbon, pea gravel, and combinations thereof.

3. The filtration assembly (200) of claim 1 or 2, wherein the second filtration stage (320) comprises one or more membrane filters.

4. The filtration assembly (200) of claim 3, wherein each of the one or more membrane filters comprises:
a housing (510) comprising:
a permeate pipe (550) comprising a plurality of openings;
one or more hollow fiber membranes surrounding the permeate pipe (550); and
an outlet (570) connected to and downstream of the permeate pipe (550);
a first endcap (520) positioned at a first end of the housing (510); and
a second endcap (530) positioned at a second end of the housing (510) opposite the first end.

5. The filtration assembly (200) of claim 4, wherein:
the first endcap (520) is a blind endcap; and
the second endcap (530) is a lateral end cap comprising a plurality of slits (535).

6. The filtration assembly (200) of claim 5, wherein the plurality of slits (535) have a first width smaller than a second width of the particles captured in the first filtration stage (310).

7. The filtration assembly (200) of any one of claims 1 to 6, wherein the second filtration stage (320) is a membrane filter selected from the group consisting of a membrane filter (1100) comprising one or more straight membranes (1110) surrounding a permeate pipe (1120), a membrane filter (1200) comprising one or more curved membranes (1210) surrounding a permeate pipe (1220), a membrane filter (1300, 1400) comprising one or more membranes (1310, 1410) helically wound around a permeate pipe (1320, 1420), and combinations thereof.

8. The filtration assembly (200) of claim 1,
wherein the first filtration stage (310) comprises a porous media (410); and
wherein the second filtration stage (320) comprises one or more membrane filters, the porous media (410) being positioned in at least a lower portion of the vessel (210) and surrounding at least a portion of the one or more membrane filters.

9. The filtration assembly (200) of any one of claims 1 to 8, wherein the vessel is pressurized.

10. The filtration assembly (200) of any one of claims 1 to 9, wherein:
the vessel (210) comprises a first portion (220) and a second portion (230); and
the first portion (210) and the second portion (220) are joined to form an enclosed container;
wherein optionally the first portion (210) and the second portion (220) are joined by at least one of a circumferential retaining device, an elastomeric seal, or bolted fasteners

11. The filtration assembly (200) of any one of claims 1 to 10, wherein the vessel (210) comprises:
an inlet port (280a);
an inlet pipe (330a) downstream of the inlet port (280a);
a diffuser (340) downstream of the inlet pipe (330a), the diffuser (340) configured to distribute a flow of unfiltered water to the first filtration stage (310);
wherein optionally the vessel (210) comprises a relief valve (350) positioned at a top portion of the vessel (210);
wherein further optionally the vessel (210) comprises a drain port (280c) positioned at a bottom portion of the vessel (210).

12. The filtration assembly (200) of claim 8, wherein the vessel (210) comprises:
a manifold (370) comprising:
one or more module receivers (385a-385d) configured to hold a membrane filter of the one or more membrane filters, each of the one or more module receivers (385a-385d) including:
a central opening configured to permit a flow of water into and out of the membrane filter;
an outlet pipe coupled to each of the one or more central openings; and
an outlet port downstream of the outlet pipe.

13. A pool system (100), comprising:
a swimming pool (110);
a pool pad (120) in fluid communication with the swimming pool (110), the pool pad (120) comprising:
an inlet pipe (130) connected to and downstream of a drain (112) positioned in the pool;
a filter vessel (124) comprising the filtration assembly (200) according to any one of claims 1 to 12 disposed downstream of the inlet pipe (130);
a valve (129) downstream of the filter vessel (124); and
an outlet pipe (140a, 140b, 140c) connected to the pool (110) and positioned downstream of the valve (129).

14. The pool system (100) of claim 13, further including a controller (150) configured to control one or more components of the pool pad (120).

15. The pool system (100) of claim 14, wherein the controller (150) is configured to operate the pool pad (120) in a filtration mode, the filtration mode including cleaning a first stream of pool water by permitting water from the pool (110) to flow from the drain (112) into the inlet pipe (130), through the filter vessel (124), through the valve (129), through the outlet pipe (140a, 140b, 140c), and out to the pool (110); and/or
wherein the controller (150) is configured to operate the pool pad (120) in a backwash mode, the backwash mode includes cleaning the filtration assembly (200) in a single pass by permitting a second stream of water to flow from the outlet pipe (140a, 140b, 140c), through the valve (129), through the filter vessel (124), through the inlet pipe (130), and out to a waste collection area.
